# FASCICULE DE BREVET EUROPEEN

(11) **EP 3 818 391 B1**
(45) Date de publication et mention de la délivrance du brevet: **25.12.2024**
(21) Numéro de dépôt: 19734095.3
(22) Date de dépôt: 01.07.2019
(51) Int. Cl.: G01S 7/48, G01S 7/481, G01S 3/781, F41G 3/06, F41G 3/22, G01S 3/784, G01S 13/86, G01S 17/86

(54) **VISEUR OPTRONIQUE ET PLATE-FORME ASSOCIÉE**
OPTRONISCHE SICHT UND ZUGEHÖRIGE PLATTFORM
OPTRONIC SIGHT AND ASSOCIATED PLATFORM

(30) Priorité: 02.07.2018 FR 1800684
(43) Date de publication de la demande: 12.05.2021
(73) Titulaire: THALES, 92400 Courbevoie (FR)
(72) Inventeur: THIBOUT, Paul, 78995 Elancourt Cedex (FR)
(74) Mandataire: Lavoix
(86) Numéro de dépôt international: PCT/EP2019/067595
(87) Numéro de publication internationale: WO 2020/007795

(56) Documents cités:
- WO-A1-93/25926
- FR-A1- 2 739 192
- FR-A1- 2 833 086
- FR-A1- 3 060 142
- US-A1- 2012 217 301
- BJORN F ANDRESEN ET AL: "Surface-based IRST: a selection process for sensor parameter values", PROC. SPIE 3061, 712 (1997), 18 March 2005 (2005-03-18), XP055033288, Retrieved from the Internet <URL:http://scitation.aip.org/getpdf/servlet/GetPDFServlet?filetype=pdf&id=PSISDG003061000001000712000001&idtype=cvips&doi=10.1117/12.280378&prog=normal> [retrieved on 20120719], DOI: 10.1117/12.280378

## Description

La présente invention concerne un viseur optronique. La présente invention se rapporte également à une plate-forme comportant un tel viseur.

La présente invention se rapporte au domaine des viseurs optroniques pouvant s'installer sur tout type de plateforme.

Pour des applications notamment d'observation ou de suivi, il est souhaitable de pouvoir observer sur un grand champ à la fois en site et en gisement avec une grande résolution.

Pour cela, il est connu d'utiliser des viseurs optroniques de deux types : des viseurs ayant un balayage mécanique en site et en gisement ou des viseurs ayant un balayage mécanique en gisement avec un grand champ optique, plutôt utilisé pour la veille. Les viseurs optroniques selon le premier type peuvent utiliser un petit champ (ou grand champ) en site et en gisement avec une grande résolution, les viseurs du deuxième type ont un balayage mécanique en gisement avec un grand champ optique et donc une faible résolution car ils n'utilisent qu'un seul détecteur pour visualiser l'ensemble du champ.

Il est aussi connu du document FR 2 833 086 A1 un dispositif de veille optronique sectorielle ou panoramique à grande vitesse sans mouvement apparent, comportant une tête à éléments optiques et un détecteur opto-électronique, la tête étant fermée par un hublot et supportée par un mécanisme d'orientation. La tête comporte N blocs optiques catoptriques ou catadioptriques fixes disposés de façon que leurs pupilles optiques de sortie soient situées sur un cercle, ces blocs optiques étant suivis d'un périscope tournant autour de l'axe dudit cercle et lui-même suivi d'un groupe optique de focalisation et d'une matrice de détecteurs opto-électroniques.

Néanmoins, l'emploi de tels viseurs optroniques ne permet pas de répondre au besoin d'une forte résolution en limitant le nombre d'axes mécaniques en mouvement et de réaliser une observation simultanée en site haut et bas.

Il est également connu de l'article de Bjorn F. Andresen intitulé « Surface-based IRST : a sélection process for sensor parameter values » portant sur un procédé de sélection de valeurs de paramètres de capteur pour un système de suivi IRST.

Il existe donc un besoin pour un viseur optronique permettant d'observer plus rapidement un large champ en site avec une bonne résolution.

Pour cela, la présente description porte sur un viseur optronique selon la revendication 1.

Suivant des modes de réalisation particuliers, le viseur comprend une ou plusieurs des caractéristiques des revendications 2 à 14, prise(s) isolément ou suivant toutes les combinaisons techniquement possibles.

La présente description se rapporte également à une plate-forme comportant un viseur optronique tel que précédemment décrit.

D'autres caractéristiques et avantages de l'invention apparaîtront à la lecture de la description qui suit, de modes de réalisation de l'invention, donnée à titre d'exemple uniquement et en référence aux dessins qui sont :
- figure 1, une vue schématique d'un exemple de viseur ;
- figure 2, une vue schématique en section du viseur de la figure 1 selon l'axe II-II indiqué sur la figure 1 ;
- figure 3, une vue schématique d'une partie du viseur en section selon l'axe III-III indiqué sur la figure 2 ;
- figure 4, une vue schématique en section du viseur de la figure 1 selon l'axe IV-IV indiqué sur la figure 1 ;
- figure 5, une vue schématique en section du viseur de la figure 1 dans le plan des axes III-III et V-V indiqués sur les figure 2 et 4 ;
- figure 6, une vue schématique des bandeaux images reconstituées obtenues par le viseur ;
- figure 7, une vue schématique d'un autre exemple de viseur, et
- figure 8, une vue schématique d'encore un autre exemple de viseur.

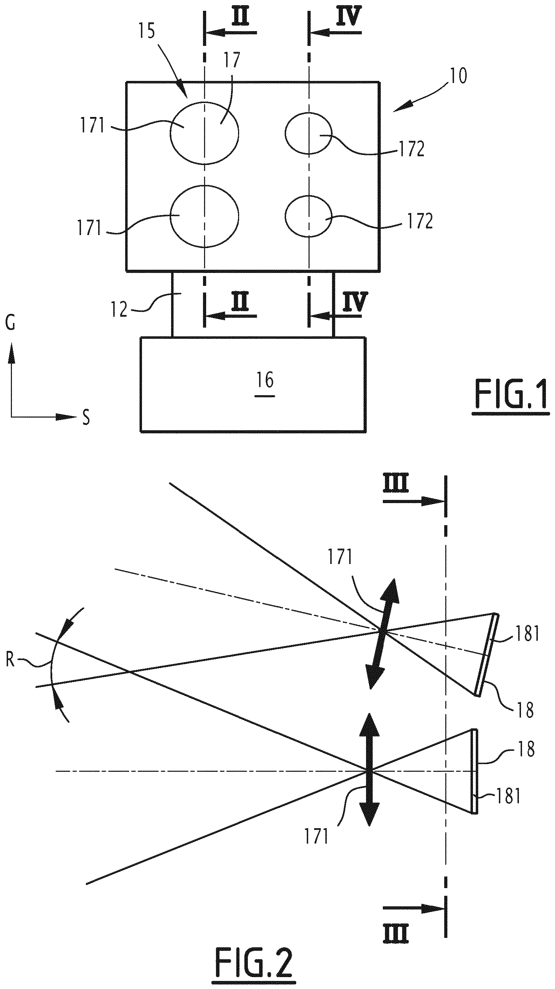

Un viseur optronique 10 est illustré sur les figures 1 à 5.

Un viseur optronique 10 sert à observer l'environnement.

En l'espèce, le viseur optronique 10 est un viseur périphérique, c'est-à-dire propre à visualiser sur 360°.

Le viseur optronique 10 est, en outre, adapté pour des observations de moyenne portée de reconnaissance.

Le viseur optronique 10 comporte un positionneur 12, une tête optronique 14 et un calculateur 16.

Le positionneur 12 est propre à faire tourner la tête optronique 14 autour d'un axe de rotation unique.

Par « unique » dans ce contexte, il est entendu que le positionneur 12 n'est pas mobile autour d'un autre axe que l'axe de rotation.

En particulier, si le positionneur 12 est propre à faire tourner la tête optronique 14 selon une rotation en site, le positionneur 12 n'est pas propre à faire tourner la tête optronique 14 en azimut.

Selon un exemple particulier, le positionneur 12 est propre à effectuer une rotation par exemple supérieure à + 180° par rapport à un axe de rotation et une rotation supérieure à -180° par rapport au même axe de rotation.

Il en résulte que le positionneur 12 est propre à effectuer une rotation autour d'un axe de rotation d'un angle total supérieur ou égal à 360°.

Selon un autre exemple, le positionneur 12 est propre à effectuer une rotation égale à Nx 360° par rapport au même axe de rotation, N étant un entier supérieur ou égal à 1.

Le positionneur 12 est, par exemple, un support tournant.

Dans le cas de la figure 1, l'axe de rotation unique correspond au gisement G. Le viseur optronique 10 permet, dans cette configuration, d'obtenir des images où le site à couvrir est obtenu instantanément (dans la direction principale du champ optique) et le gisement à couvrir est obtenu par rotation autour de l'axe.

La tête optronique 14 comporte un ensemble de senseurs optiques 15, appelé ensemble 15 dans ce qui suit.

L'ensemble 15 présente un champ de vue dissymétrique. Selon une direction principale il présente un champ de vue supérieur ou égal à 60°, avantageusement supérieur à 90°.

En l'espèce, pour l'orientation montrée sur la figure 1, cela signifie que l'ensemble 15 présente en site S un champ de vue égal à 60° (avantageusement supérieur à 90°)

L'ensemble 15 comporte des optiques 17 et des senseurs optiques 18, chaque senseur optique 18 comprenant une matrice M de pixels, le nombre de pixels étant tel que le champ de vue instantané de chaque pixel est inférieur à 500 microradians (µrad) et supérieur à 50 microradians.

Le champ de vue instantané est la résolution angulaire maximale d'un pixel. Le champ de vue instantané est souvent désigné sous l'acronyme IFOV par référence au terme anglais correspondant de « *Instantaneous Field Of View* »*.*

Le champ de vue instantané est mesuré dans l'espace objet de chaque optique 17.

Cela implique que ce sont les senseurs optiques 18 eux-mêmes qui vont assurer que la condition sur le champ de vue instantané de chaque pixel soit respectée et non une collaboration entre plusieurs éléments (par exemple, une optique ou un miroir) et le senseur optique 18 considéré.

En outre, la condition sur le champ de vue instantané de chaque pixel implique un grand nombre de pixels, par exemple, plus de 1000 pixels, voire plus de 2000 pixels.

Par ailleurs, le champ de vue instantané de chaque pixel est préférablement supérieur ou égal à 200 µrad, voire supérieur ou égal à 250 µrad, pour limiter la sensibilité au mouvement pendant le temps d'intégration du senseur optique 18. Une telle condition sur le champ de vue instantanée permet de rendre l'ensemble 15 moins sensible aux vibrations d'éléments extérieurs, en particulier lorsqu'un véhicule comportant l'ensemble 15 est à l'arrêt. Pour limiter le flou d'image même si le véhicule roule, il est possible de réduire le temps d'intégration de la prise d'image afin de réduire le flou pendant le temps d'intégration et augmenter la cadence image afin d'améliorer la sensibilité de la caméra.

L'ensemble 15 est ainsi propre à prendre des images de l'environnement qui sont transmises au calculateur 16 via une liaison, par exemple par une connexion filaire ou par une fibre.

De manière générale, la liaison est propre à transmettre des données vers le calculateur 16 comme des informations, des images ou un ensemble d'images formant une vidéo.

Le calculateur 16 est positionné sous le positionneur 12.

Le calculateur 16 est ainsi positionné de manière à être fixe, seuls le positionneur 12 et l'ensemble 15 effectuant une rotation en gisement G.

Dans un tel cas, il est à noter que, la liaison entre le calculateur 16 et le viseur optronique 10 est dépourvue de joint tournant.

Cela permet de réduire la complexité du transfert des signaux haut débits de type vidéo vers le calculateur 16.

En variante, le calculateur 16 est positionné sur le positionneur 12. Dans un tel cas, il est préférable que seules les fonctions de traitement temps réel soit appliquées sur des images brutes, de type raw pour « brut ».

Le calculateur 16 est un système propre à effectuer des calculs, en particulier pour effectuer des traitements d'image.

En fonctionnement, le positionneur 12 fait tourner en gisement G l'ensemble 15 de manière à acquérir en temps réel une image de l'environnement.

Il est ainsi obtenu sur un angle en site S de 60° (avantageusement 90°) une image de l'environnement sur 360°.

Un tel viseur optronique 10 permet d'observer un large champ en site S (au moins 60°) et en gisement G avec une définition angulaire fine (champ de vue instantané de chaque pixel est inférieur à 500 µrad et supérieur à 50 µrad). Plus précisément, le viseur optronique 10 permet d'observer plusieurs champs en site S en statique ou en mouvement. Dans le cas de champs en mouvement, une stabilisation électronique est utilisée.

Dans sa configuration initiale le viseur optronique 10 n'utilise qu'un seul système mécanique de rotation sans stabilisation mécanique, le viseur optronique 10 est de mise en oeuvre plus simple.

Bien entendu, le viseur optronique 10 est également compatible avec une stabilisation mécanique si cela est souhaité.

En outre, du fait de la limitation des mises en mouvement du viseur optronique 10, le viseur optronique 10 est plus robuste et de conception plus simple.

De plus, le viseur optronique 10 permet de faire passer des débits importants, ce qui permet un transfert rapide de vidéos.

Cela permet également que le viseur optronique 10 soit dépourvu de joint tournant en gisement G.

En résumé, le viseur optronique 10 permet d'observer plus rapidement un large champ en site et en gisement avec une bonne résolution.

D'autres modes de réalisation sont envisageables pour le viseur optronique 10.

L'ensemble 15 est dépourvu de zoom. Cela permet d'obtenir un ensemble 15 de mise en oeuvre plus simple.

Les ensembles 15 sont, de préférence, également non refroidis pour une raison similaire.

En variante ou en complément, un champ de vue en site S supérieur ou égal à 60°, de préférence supérieur ou égal à 90°. Cela permet d'obtenir une plus grande étendue angulaire d'observation pour le viseur optronique 10.

Une manière d'obtenir un tel champ de vue est d'utiliser plusieurs senseurs optiques 18 comme visible à la figure 1. Dans un tel cas, l'ensemble 15 comporte des senseurs optiques 18 comportant chacun une matrice M de pixels.

Les matrices M de pixels sont carrées ou rectangulaires.

Dans l'exemple présenté, les matrices M de pixels sont rectangulaires.

Le nombre de pixels de l'ensemble 15 est la somme du nombre de pixels de chaque matrice M diminué du nombre de pixels pour une matrice correspondant au recouvrement des champs. En l'espèce, cela implique que la somme du nombre de pixels de chaque matrice M est telle que le champ de vue instantané de chaque pixel est inférieur à 500 microradians.

Les senseurs optiques 18 sont fixes l'un par rapport à l'autre et présentent chacun un champ de vue propre, le champ de vue de l'ensemble 15 étant la somme des champs de vue des senseurs optiques 18, au recouvrement des champs près.

Dans un tel cas de figure, chaque senseur optique 18 est relié au calculateur 16 par une liaison respective de sorte que chaque senseur optique 18 correspond à une voie.

Les voies sont indépendantes les unes des autres.

En outre, le nombre de voies est relativement faible.

A titre d'illustration, le nombre de senseurs optiques 18 et donc de voies est égal à 2, 3 ou 4.

Dans le cas de la figure 1, le nombre de senseurs optiques 18 est de quatre, à savoir deux senseurs optiques 181 associés à une optique 171 respective et deux senseurs optiques 182 associés à une optique 172 respective.

En outre, chaque champ de vue d'un senseur optique 18 présente un léger recouvrement avec au moins un autre champ de vue d'un senseur optique 18 de même bande spectrale. Dans le cas présenté, le recouvrement R correspond à un recouvrement angulaire en site S. Le recouvrement R est matérialisé sur la figure 2. Par contre, en gisement les senseurs pour chacun des sites observent les mêmes champs images (il y a donc recouvrement total entre les différentes bandes spectrales).

Par exemple, le recouvrement en site entre deux champs de vue de même bande passante optique (par exemple, IRNR pour Infrarouge Non Refroidi (bande 8 à 12 microns) est compris entre 1° et 3°. Par contre, les deux voies IRNR et les deux voies visibles se recouvrent en gisement.

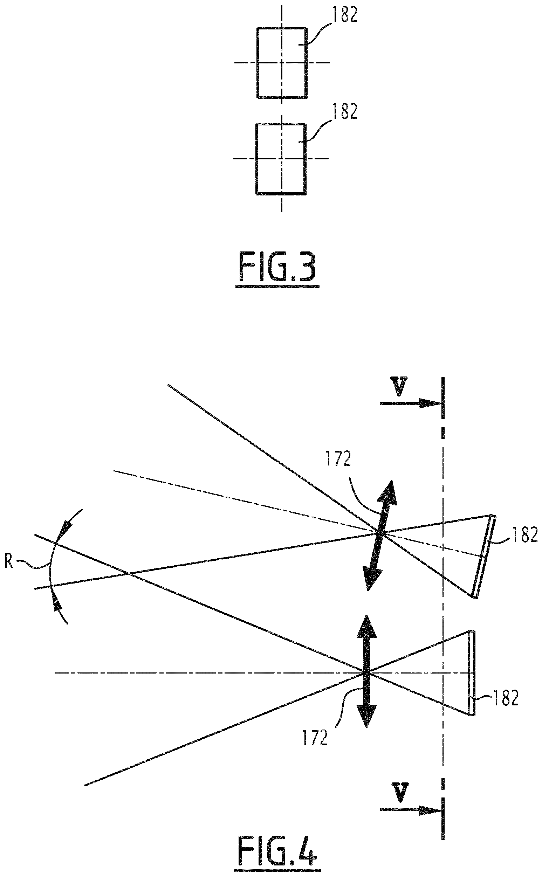

Aussi, plus strictement, le nombre de pixels de l'ensemble 15 est la somme du nombre de pixels de chaque matrice M diminué du nombre de pixels pour une matrice correspondant au recouvrement R des champs. Les recouvrements R sont visibles sur les figures 2 et 3.

De plus, les senseurs optiques 18 sont alignés selon l'axe de rotation. Cela signifie qu'en définissant un centre pour chaque matrice M de pixels, les centres sont alignés selon une droite parallèle à l'axe de rotation.

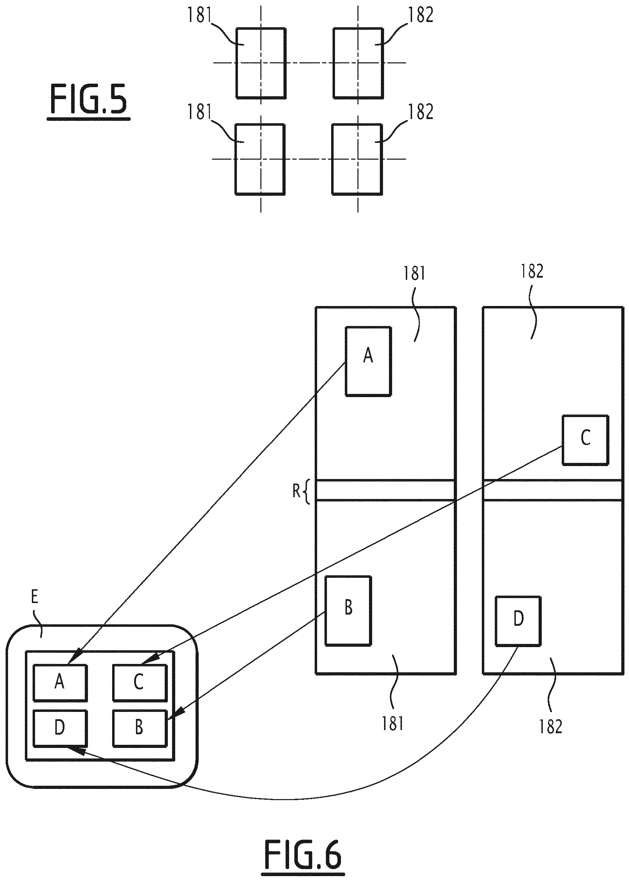

Par exemple, comme visible sur la figure 3 ou 5, pour un champ de vue en site S de 60° pour le viseur optronique 10 avec un recouvrement de 1°, il suffit d'utiliser deux senseurs optiques 181 ou 182 identiques et présentant un champ de vue en site S de 31° avec chacun un nombre de pixels permettant d'avoir un champ de vue instantané inférieur à 500 µrad et supérieur à 50 µrad).

Dans un tel cas, il est ainsi formé un bandeau optique de 60° en site S, par exemple entre -15° et 45° par rapport à une direction de référence pour la voie IRNR et identiquement pour la voie visible, ces deux bandeaux regardant le même champ image .La figure 6 permet d'illustrer comment on peut choisir dans cette image en forme de bandeau des zones d'intérêt A et B pour l'image constituée par les senseurs 181 et respectivement C et D pour les senseurs 182.

Selon un autre exemple, pour un champ de vue en site S de 90° pour le viseur optronique 10 et un recouvrement de 1°, il suffit d'utiliser trois senseurs optiques 18 identiques et présentant un champ de vue en site S de 31° avec chacun un nombre de pixels suffisants pour que le deuxième senseur optique 18 (senseur intermédiaire) couvre 1° en site S de chacun des premier et troisième senseurs optiques 18 (senseurs extrêmes). Autrement formulé, le premier senseur optique 18 et le deuxième senseur optique 18 sont superposés sur 1° tandis que le deuxième senseur optique 18 et le troisième senseur optique 18 sont superposés sur 1°.

Chaque pixel présente alors un champ de vue instantané inférieur à 500 µrad et supérieur à 50 µrad.

Dans un tel cas, il est ainsi formé un bandeau optique de 90° en site S, par exemple entre -15° et 75° par rapport à une direction de référence.

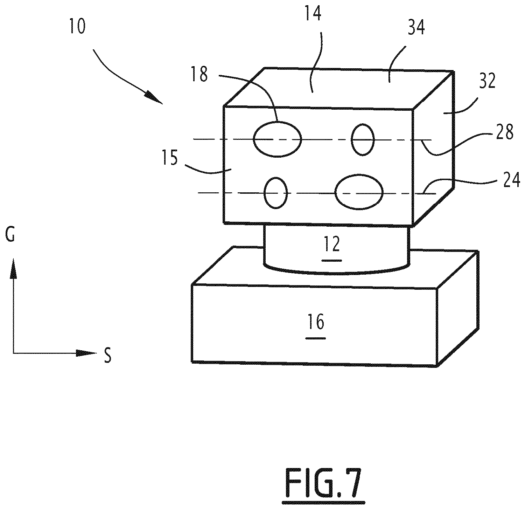

Selon le mode de réalisation illustré par la figure 7, les senseurs optiques 18 sont agencés selon deux lignes 24 et 28.

Cela signifie que les centres de chaque senseur optique 18, c'est-à-dire les centres de chaque matrice M de pixels, sont alignés selon une ligne respective.

Les lignes 24 et 28 sont, de préférence, parallèles.

Cela permet notamment d'envisager des configurations à au moins deux bandes spectrales pour l'ensemble 15.

Par définition, lorsque l'ensemble 15 est bispectral, au moins un senseur optique 18 est propre à fonctionner selon une bande spectrale différente d'une autre bande spectrale sur laquelle un autre senseur optique 18 est propre à fonctionner. La définition se généralise immédiatement à un cas avec plus de bandes spectrales.

Il est à noter d'ailleurs que d'autres modes de réalisations sont compatibles en fonctionnement à plusieurs bandes spectrales dont celui qui vient d'être présenté.

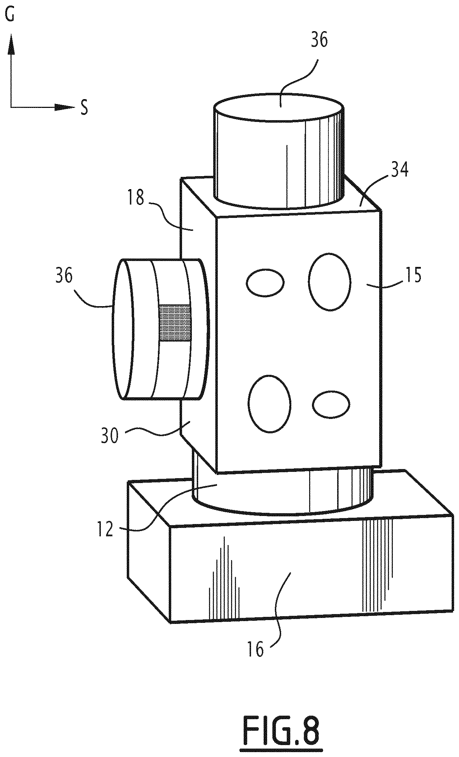

Dans le cas de la figure 8, les senseurs optiques 18 d'une même ligne 24, 28 sont propres à fonctionner selon une bande spectrale différente comme cela apparaît avec la forme différente des senseurs optiques 18.

Selon une autre variante, les senseurs optiques 18 d'une même ligne 24, 28 sont propres à fonctionner dans la même bande spectrale

Selon une variante plus élaborée, les senseurs optiques 18 partagent une même optique pour des bandes spectrales différentes.

Par exemple, les senseurs optiques 18 de la première ligne 24 fonctionnent dans le proche infrarouge alors que les senseurs optiques 18 fonctionnent dans le visible.

D'autres bandes spectrales sont également utilisables dans ce contexte. De manière générale, les bandes spectrales sont choisies parmi les bandes suivantes :
- le proche infrarouge (qui regroupe les longueurs d'onde comprises entre 0,74 micromètre (µm) et 1 µm et qui est aussi désigné sous l'acronyme NIR),
- le visible (qui regroupe les longueurs d'onde comprises entre 0,4 µm et 0,8 µm),
- la bande des infrarouges de faibles longueurs d'ondes (qui regroupe les longueurs d'onde comprises entre 1 µm et 3 µm et qui est aussi désigné sous l'acronyme SWIR),
- la bande des infrarouges de moyennes longueurs d'ondes (qui regroupe les longueurs d'onde comprises entre 3 µm et 5 µm et qui est aussi désigné sous l'acronyme MWIR), et
- la bande des infrarouges de fortes longueurs d'ondes (qui regroupe les longueurs d'onde comprises entre 8 µm et 12 µm et qui est aussi désigné sous l'acronyme LWIR).

Selon un autre mode de réalisation montré par la figure 8, la tête optronique 14 présente une forme parallélépipédique (notamment cubique) présentant des faces extrêmes dont seules trois 30, 32 et 34 sont visibles sur les figures 7 et 8, au moins une partie des faces extrêmes 30, 32 et 34 étant propre à accueillir un module additionnel 36.

Par exemple, un module additionnel 36 est un radar, un lidar, un télémètre, un capteur tridimensionnel, un sonar ou un autre senseur optique 18 comportant des matrices M de pixels.

Alternativement ou en complément, un module additionnel 36 est un effecteur.

Dans le cas de la figure 5, une face extrême 32 comporte un lidar et une face extrême 34 comporte un senseur optique 18.

La forme parallélépipédique permet en outre de mettre en oeuvre aisément une rotation de 90° permettant de passer du champ en site au champ en gisement soit de manière manuelle soit par une rotation motorisée de 90° (à noter que dans ce dernier cas le télémètre restera fixé sur une embase rigidement maintenue sur l'axe gisement G).

Dans un tel cas, la tête optronique 14 est propre à fonctionner selon deux positions, une première position dans laquelle la direction principale du champ de vue de l'ensemble des senseurs optiques est parallèle à l'axe de rotation et une deuxième position dans laquelle la direction principale du champ de vue de l'ensemble de senseurs optiques est perpendiculaire à l'axe de rotation. Lorsque le passage d'une position à l'autre n'est pas effectué manuellement, le viseur optronique 10 est muni d'un moyen de basculement de la tête optronique entre les deux positions.

Selon un autre mode de réalisation, le calculateur 16 est propre à effectuer des traitements spécifiques.

Par exemple, le calculateur 16 utilise les données transmises pour réaliser des stabilisations des images et des dérotations des images. En particulier, le calculateur 16 est propre à stabiliser les images de l'ensemble 15 en gisement G et en site S. La stabilisation électronique est réalisée par intégration de données provenant soit de gyromètres, soit par analyse des images soit les deux en même temps.

Selon un autre exemple, le calculateur 16 est propre à mettre en oeuvre un zoom électronique.

Selon encore un autre mode de réalisation, une ligne de visée est définie et le positionneur 12 est propre à stabiliser la ligne de visée. La ligne de visée est ainsi stabilisée mécaniquement en gisement G.

Selon encore un autre mode de réalisation, les senseurs optiques 18 présentent des matrices M rectangulaires présentant une largeur maximale parallèle au site S.

Il est aussi à noter que les ensembles 15 peuvent couvrir des champs en site S avec la largeur maximale parallèle au gisement G selon le besoin.

En variante, le positionneur 12 est adapté à faire tourner la tête optronique 14 en site S au lieu d'en gisement G.

Le viseur optronique 10 est utilisable pour des applications demandant une visibilité instantanée sur un grand champ avec une bonne définition sur une plate-forme statique et dynamique.

Notamment, pour le cas de tirs de canon à une cadence élevée, il devient possible de conserver une image asservie à l'axe du canon ou toute autre référence et une image sur la cible.

De tels viseurs optroniques 10 sont propres à être installés sur tout type de plate-forme ayant un besoin d'observation un large champ en site S (au moins 30°) et en gisement G avec une définition angulaire très fine, ce besoin étant à combler avec un viseur optronique 10 de mise en oeuvre aisé.

Un véhicule terrestre est un exemple de plate-forme.

Il est à noter que, dans le cas spécifique d'un char d'assaut, Les performances obtenues dépendent de la bande spectrale considérée.

Par exemple, pour un ensemble 15 fonctionnant en visible, un champ de vue instantané chaque pixel est de 250 µrad et la portée RECO mesurée à l'aide d'une mire de Johnson sur le char sera de l'ordre de 2000 mètres (m). Pour un ensemble 15 fonctionnant en proche infrarouge, un champ de vue instantané pour chaque pixel est 400 µrad et la portée RECO mesurée à l'aide d'une mire de Johnson sur le char sera de l'ordre de 1000 m.

En variante, la plate-forme est une plate-forme aérienne ou navale.

Dans chacun des cas illustrés, la plate-forme est mobile mais rien n'empêche d'utiliser le viseur optronique 10 pour une plate-forme fixe.

D'autres modes de réalisation sont envisageables, ces modes de réalisation résultant de toute combinaison techniquement possible des modes de réalisation précédents.

## Revendications

1. Viseur optronique (10) comportant :
- une tête optronique (14),
- un positionneur (12) propre à faire tourner la tête optronique (14) autour d'un axe de rotation (G, S),
la tête optronique (14) comportant un ensemble (15) de senseurs optiques (18) organisé pour former un champ de vue dissymétrique supérieur ou égal à 60° dans une direction principale,
le viseur étant **caractérisé en ce que** :
- l'axe de rotation (G, S) autour duquel le positionneur (12) est propre à faire tourner la tête optronique (14) est unique,
- les senseurs optiques (18) sont fixes l'un par rapport à l'autre et présentant chacun un champ de vue propre, le champ de vue de l'ensemble (15) étant la somme des champs de vue des senseurs optiques (18) au recouvrement des champs près,
- le champ de vue de l'ensemble (15) est supérieur à 30° dans la direction perpendiculaire à la direction principale, et
- les senseurs optiques (18) comportent des pixels présentant chacun un champ de vue instantané, le nombre de pixels étant tel que le champ de vue instantané est inférieur à 500 microradians et supérieur à 50 microradians.

2. Viseur optronique selon la revendication 1, dans lequel l'ensemble (15) de senseurs optiques (18) est organisé pour former un champ de vue supérieur ou égal à 90° dans la direction principale.

3. Viseur optronique selon la revendication 1 ou 2, dans lequel l'ensemble (15) de senseurs optiques (18) est organisé pour former un champ de vue supérieur ou égal à 60° dans la direction perpendiculaire.

4. Viseur optronique selon l'une quelconque des revendications 1 à 3, dans lequel le nombre de pixels est tel que le champ de vue instantané soit supérieur à 200 microradians, de préférence supérieur à 250 microradians.

5. Viseur optronique selon l'une quelconque des revendications 1 à 4, dans lequel les pixels de chaque senseur optique (18) forment une matrice (M) de pixels, le nombre de pixel de l'ensemble (15) étant la somme du nombre de pixels de chaque matrice (M) diminué du nombre de pixels pour une matrice correspondant au recouvrement des champs.

6. Viseur optronique selon la revendication 5, dans lequel chaque champ de vue d'un senseur optique (18) présente un recouvrement avec au moins un autre champ de vue d'un senseur optique (18) dans la direction principale.

7. Viseur optronique selon la revendication 6, dans lequel le recouvrement en champ est compris entre 1° et 3° dans la direction principale.

8. Viseur optronique selon l'une quelconque des revendications 1 à 7, dans lequel la direction principale du champ de vue de l'ensemble (15) est parallèle à l'axe de rotation (G, S).

9. Viseur optronique selon l'une quelconque des revendications 1 à 7, dans lequel la direction principale du champ de vue de l'ensemble (15) est perpendiculaire à l'axe de rotation (G, S).

10. Viseur optronique selon l'une quelconque des revendications 1 à 9, dans lequel au moins deux senseurs optiques (18) sont propres à fonctionner dans la même bande spectrale.

11. Viseur optronique selon l'une quelconque des revendications 1 à 10, dans lequel l'ensemble (15) est propre à fonctionner dans au moins deux bandes spectrales différentes.

12. Viseur optronique selon l'une quelconque des revendications 1 à 11, dans lequel la tête optronique (14) présente une forme parallélépipédique présentant des faces extrêmes, au moins une partie des faces étant propre à accueillir un module additionnel, tel un senseur ou un effecteur.

13. Viseur optronique selon l'une quelconque des revendications 1 à 12, dans lequel la tête optronique (14) est propre à fonctionner selon deux positions, une première position dans laquelle la direction principale du champ de vue de l'ensemble (15) est parallèle à l'axe de rotation (G, S) et une deuxième position dans laquelle la direction principale du champ de vue de l'ensemble (15) est perpendiculaire à l'axe de rotation (G, S).

14. Viseur optronique selon la revendication 13, dans laquelle le viseur optronique (10) est muni d'un moyen de basculement de la tête optronique (14) entre les deux positions.

15. Plate-forme comportant un viseur optronique (10) selon l'une quelconque des revendications 1 à 14.

## Patentansprüche

1. Optronischer Sucher (10), umfassend:
- einen Optronikkopf (14),
- ein Stellgerät (12), das geeignet ist, um den Optronikkopf (14) um eine Drehachse (G, S) zu drehen,
der Optronikkopf (14) umfassend eine Anordnung (15) von optischen Sensoren (18), die organisiert sind, um ein asymmetrisches Sichtfeld von 60° oder mehr in einer Hauptrichtung zu bilden,
wobei der Sucher **dadurch gekennzeichnet ist, dass**:
- die Drehachse (G, S), um die das Stellgerät (12) geeignet ist, um den Optronikkopf (14) zu drehen, einzigartig ist,
- die optischen Sensoren (18) in Bezug aufeinander feststehend sind und jeweils ein eigenes Sichtfeld aufweisen, wobei das Sichtfeld der Anordnung (15) die Summe der Sichtfelder der optischen Sensoren (18) bis auf eine Feldüberlappung ist,
- das Sichtfeld der Anordnung (15) in der Richtung senkrecht zu der Hauptrichtung größer ist als 30°, und
- die optischen Sensoren (18) umfassend Pixel, die jeweils ein momentanes Sichtfeld
aufweisen, wobei die Anzahl der Pixel derart ist, dass das momentane Sichtfeld weniger als 500 Mikroradiant und mehr als 50 Mikroradiant ist.

2. Optronischer Sucher nach Anspruch 1, wobei die Anordnung (15) von optischen Sensoren (18) organisiert ist, sodass sie ein Sichtfeld größer als oder gleich wie 90° in der Hauptrichtung bilden.

3. Optronischer Sucher nach Anspruch 1 oder 2, wobei die Anordnung (15) von optischen Sensoren (18) organisiert ist, sodass sie ein Sichtfeld größer als oder gleich wie 60° in der senkrechten Richtung bilden.

4. Optronischer Sucher nach einem der Ansprüche 1 bis 3, wobei die Anzahl der Pixel derart ist, dass das momentane Sichtfeld größer als 200 Mikroradiant, vorzugsweise größer als 250 Mikroradiant, ist.

5. Optronischer Sucher nach einem der Ansprüche 1 bis 4, wobei die Pixel von jedem optischen Sensor (18) eine Matrix (M) von Pixeln bilden, wobei die Anzahl der Pixel der Anordnung (15) die Summe der Anzahl der Pixel von jeder Matrix (M) abzüglich der Anzahl der Pixel für eine Matrix ist, die der Feldüberlappung entspricht.

6. Optronischer Sucher nach Anspruch 5, wobei jedes Sichtfeld eines optischen Sensors (18) eine Überlappung mit mindestens einem anderen Sichtfeld eines optischen Sensors (18) in der Hauptrichtung aufweist.

7. Optronischer Sucher nach Anspruch 6, wobei die Feldüberdeckung in der Hauptrichtung zwischen 1° und 3° ist.

8. Optronischer Sucher nach einem der Ansprüche 1 bis 7, wobei die Hauptrichtung des Sichtfelds der Anordnung (15) parallel zu der Drehachse (G, S) ist.

9. Optronischer Sucher nach einem der Ansprüche 1 bis 7, wobei die Hauptrichtung des Sichtfelds der Anordnung (15) senkrecht zu der Drehachse (G, S) ist.

10. Optronischer Sucher nach einem der Ansprüche 1 bis 9, wobei mindestens zwei optische Sensoren (18) geeignet sind, um in demselben Spektralband zu funktionieren.

11. Optronischer Sucher nach einem der Ansprüche 1 bis 10, wobei die Anordnung (15) geeignet ist, um in mindestens zwei verschiedenen Spektralbändern zu funktionieren.

12. Optronischer Sucher nach einem der Ansprüche 1 bis 11, wobei der Optronikkopf (14) eine parallelepipedische Form aufweist, die Endflächen aufweist, wobei mindestens ein Teil der Flächen geeignet ist, um ein Zusatzmodul, wie beispielsweise einen Sensor oder einen Effektor, aufzunehmen.

13. Optronischer Sucher nach einem der Ansprüche 1 bis 12, wobei der Optronikkopf (14) geeignet ist, um in zwei Positionen zu funktionieren, einer ersten Position, in der die Hauptrichtung des Sichtfelds der Anordnung (15) parallel zu der Drehachse (G, S) ist, und einer zweiten Position, in der die Hauptrichtung des Sichtfelds der Anordnung (15) senkrecht zu der Drehachse (G, S) ist.

14. Optronischer Sucher nach Anspruch 13, wobei der optronische Sucher (10) mit einer Einrichtung zum Kippen des Optronikkopfs (14) zwischen den zwei Positionen versehen ist.

15. Plattform, umfassend einen optronischen Sucher (10) nach einem der Ansprüche 1 bis 14.

## Claims

1. Optronic sight (10) including:
- an optronic head (14),
- a positioner (12) adapted to rotate the optronic head (14) about a rotation axis (G, S),
the optronic head (14) comprising a set (15) of optical sensors (18) which are organized to form an asymmetrical field of view which is greater than or equal to 60° in a main direction
the optronic sight being **characterized in that**:
- the rotation axis (G, S) about which the positioner (12) is adapted to rotate the optronic head (14) is single,
- the optical sensors (18) being stationary relative to one another and each having its own field of view, the field of view of the set (15) being the sum of the fields of view of the optical sensors (18) to within the overlap of the fields,
- the field of view of the set (15) being greater than 30° in the direction perpendicular to the main direction, and
- the optical sensors (18) comprising pixels which each have an instantaneous field of view, the number of pixels being such that the instantaneous field of view is less than 500 microradians and greater than 50 microradians.

2. Optronic sight according to claim 1, wherein the set (15) of optical sensors (18) is organized to form a field of view greater than or equal to 90° in the main direction.

3. Optronic sight according to claim 1 or 2, wherein the set (15) of optical sensors (18) is organized to form a field of view greater than or equal to 60° in the perpendicular direction.

4. Optronic sight according to any one of claims 1 to 3, wherein the number of pixels is such that the instantaneous field of view is greater than 200 microradians, preferably greater than 250 microradians.

5. Optronic sight according to any one of claims 1 to 4, wherein the pixels of each optical sensor (18) form a matrix (M) of pixels, the number of pixels of the set (15) being the sum of the number of pixels of each matrix (M) decreased by the number of pixels for a matrix corresponding to the overlap of the fields,

6. Optronic sight according to claim 5, wherein each field of view of an optical sensor (18) has an overlap with at least one other field of view of an optical sensor (18) in the main direction.

7. Optronic sight according to claim 6, wherein the field overlap is between 1° and 3° in the main direction.

8. Optronic sight according to any one of claims 1 to 7, wherein the main direction of the field of view of the set (15) is parallel to the rotation axis (G, S).

9. Optronic sight according to any one of claims 1 to 7, wherein the main direction of the field of view of the set (15) is perpendicular to the rotation axis (G, S).

10. Optronic sight according to any one of claims 1 to 9, wherein at least two optical sensors (18) are adapted to operate in the same spectral band.

11. Optronic sight according to any one of claims 1 to 10, wherein the set (15) is adapted to operate in at least two different spectral bands.

12. Optronic sight according to any one of claims 1 to 11, wherein the optronic head (14) has a parallelepipedal shape having end faces, at least one part of the faces being adapted to accommodate an additional module, such as a sensor or an effector.

13. Optronic sight according to any one of claims 1 to 12, wherein the optronic head (14) is adapted to operate according to two positions, a first position in which the main direction of the field of view of the set (15) of optical sensors is parallel to the rotation axis (G, S) and a second position in which the main direction of the field of view of the set (15) of optical sensors is perpendicular to the rotation axis (G, S).

14. Optronic sight according to claim 13, wherein the optronic sight (10) is provided with means for switching the optronic head (14) between the two positions.

15. Platform including an optronic sight (10) according to any one of claims 1 to 14.
